# EUROPÄISCHE PATENTSCHRIFT

(11) **EP 4 339 723 B1**
(45) Veröffentlichungstag und Bekanntmachung des Hinweises auf die Patenterteilung: **08.04.2026**
(21) Anmeldenummer: 23192408.5
(22) Anmeldetag: 21.08.2023
(51) Int. Cl.: G05B 19/406, H02J 9/04, H02J 9/06

(54) **VERFAHREN ZUM BETREIBEN EINER WERKSTÜCKBEARBEITUNGSANLAGE, SOWIE WERKSTÜCKBEARBEITUNGSANLAGE**
METHOD FOR OPERATING A WORKPIECE PROCESSING SYSTEM, AND WORKPIECE PROCESSING SYSTEM
PROCÉDÉ DE FONCTIONNEMENT D'UNE INSTALLATION D'USINAGE DE PIÈCES ET INSTALLATION D'USINAGE DE PIÈCES

(30) Priorität: 15.09.2022 DE 102022123669
(43) Veröffentlichungstag der Anmeldung: 20.03.2024
(73) Patentinhaber: HOMAG Plattenaufteiltechnik GmbH, 75365 Calw (DE)
(72) Erfinder: Heuer, Stephan, 21709 Himmelpforten (DE); Müller, Henry, 21745 Hemmoor (DE); Bacher, Markus, 72218 Wildberg (DE); Granzow, Dennis, 21709 Düdenbüttel (DE)
(74) Vertreter: DREISS Patentanwälte PartG mbB

(56) Entgegenhaltungen:
- EP-B1- 2 379 286
- US-A1- 2011 204 720
- US-A1- 2020 020 050
- US-A1- 2022 080 852
- JAECH AARON ET AL: "Real-Time Prediction of the Duration of Distribution System Outages", IEEE TRANSACTIONS ON POWER SYSTEMS, IEEE, USA, vol. 34, no. 1, 1 January 2019 (2019-01-01), pages 773 - 781, XP011694457, ISSN: 0885-8950, [retrieved on 20181220], DOI: 10.1109/TPWRS.2018.2860904

## Beschreibung

Die Erfindung betrifft ein Verfahren zum Betreiben einer Werkstückbearbeitungsanlage sowie eine Werkstückbearbeitungsanlage nach den Oberbegriffen der jeweiligen nebengeordneten Ansprüche.

DE 10 2020 115 462 A1 beschreibt eine Werkstückbearbeitungseinrichtung in Form einer Plattenaufteilsäge. Mit dieser können großformatige plattenförmige Ausgangswerkstücke durch Längsschnitte in streifenförmige Halbzeuge und weiter durch Querschnitte und gegebenenfalls noch weitere Schnitte in fertig aufgeteilte Werkstücke aufgeteilt werden. Diese fertig aufgeteilten Werkstücke können beispielsweise für die Möbelherstellung verwendet werden.

Zu einer solchen Plattenaufteilsäge gehört typischerweise eine Werkstückzuführeinrichtung, beispielsweise in Form eines Flächenlagers. Dieses dient dazu, die gelagerten großformatigen plattenförmigen Ausgangswerkstücke der Plattenaufteilsäge zuzuführen bzw. bereitzustellen. In diesem Fall ist die Werkstückbearbeitungseinrichtung das "Ziel" der Werkstückzuführeinrichtung. Auch können durch ein solches Flächenlager Werkstücke, die von der Plattenaufteilsäge nur zum Teil bearbeitet wurden, zurückgenommen und zwischengelagert werden. In diesem Fall ist die Werkstückbearbeitungseinrichtung die "Quelle" der Werkstückzuführeinrichtung.

Zur Bewegung der großformatigen plattenförmigen Ausgangswerkstücke verfügt ein solches Flächenlager beispielsweise über einen Portalroboter mit einer Saugtraverse, die mittels Saugnäpfen an einer Oberseite eines großformatigen plattenförmigen Werkstücks angreifen, diese anheben und so zur Plattenaufteilsäge bewegen kann. Die Gesamtheit aus Werkstückzuführeinrichtung und Werkstückbearbeitungseinrichtung kann eine Werkstückbearbeitungsanlage bilden. Dabei ist es möglich, dass eine solche Werkstückbearbeitungsanlage eine Werkstückzuführeinrichtung und mehrere mit dieser funktional gekoppelte Werkstückbearbeitungseinrichtung umfasst.

US 2011/0204720 A1 beschreibt ein Stromversorgungsnetz für die Versorgung von Wohngebäuden, Industriegebäuden, etc., mit Strom, bei dem bei einem Stromausfall ein Notverfahren ausgeführt wird. Der Artikel JAECH AARON ET AL: "Real-Time Prediction of the Duration of Distribution System Outages", Januar 2019, befasst sich mit der Vorhersage der Dauer von Stromausfällen unter Verwendung von historischen Daten. EP 2 379 286 B1 beschreibt einen Roboter, der bei einem Stromausfall von einem Energiereservoir versorgt wird.

Die vorliegende Erfindung hat die Aufgabe, einerseits die Sicherheit im Betrieb einer solchen Werkstückbearbeitungsanlage zu verbessern und andererseits auch bei einer nicht immer sichergestellten Energiezufuhr einen möglichst produktiven Betrieb der Werkstückbearbeitungsanlage zu ermöglichen.

Diese Aufgabe wird durch das Verfahren und die Werkstückbearbeitungsanlage mit den Merkmalen der unabhängigen Ansprüche gelöst. Vorteilhafte Weiterbildungen sind in Unteransprüchen genannt.

Ein Vorteil der vorliegenden Erfindung besteht darin, dass ein unkontrolliertes Abschalten mindestens eines Teilbereichs der Werkstückbearbeitungsanlage bei einem Ausfall der ersten Energieversorgungseinrichtung ("Stromausfall") mit hoher Zuverlässigkeit verhindert wird.

Gleichzeitig wird der Betrieb der Werkstückbearbeitungsanlage bei einem Stromausfall im Hinblick auf die erwartete Dauer des Ausfalls optimiert, wodurch die Produktivität der Werkstückbearbeitungsanlage erhöht wird. Auch wird die Sicherheit erhöht, da aufgrund des vorgegebenen Notverfahrens verhindert werden kann, dass Werkstücke unkontrolliert bewegt werden, beispielsweise herunterfallen. Möglich ist sogar, dass bestimmte vorgesehene Verfahrensschritte durch die Werkstückbearbeitungsanlage auch bei einem Stromausfall durchgeführt werden, und zwar ohne Eingriff durch eine Bedienperson, wodurch ebenfalls die Produktivität und Effizienz erhöht wird. Die vorliegende Erfindung ermöglicht ferner eine Reduzierung der Zeit zur Wiederinbetriebnahme der gesamten Werkstückbearbeitungsanlage nach einem Stromausfall.

Basis hierfür ist eine intelligente Optimierung des Notverfahrens auf der Basis der erwarteten Dauer des Stromausfalls. Hierzu können die Dauern von in der Vergangenheit im Betrieb aufgetretenen Stromausfällen abgespeichert und zur Ermittlung einer erwarteten Dauer von künftigen Ausfällen ausgewertet werden.

Konkret vorgeschlagen wird ein Verfahren zum Betreiben einer Werkstückbearbeitungsanlage, die eine Werkstückbearbeitungseinrichtung in Form einer Plattenaufteilsäge zum Aufteilen von großformatigen Platten, beispielsweise aus Holz, und eine Werkstückzuführeinrichtung, beispielsweise ein Flächenlager, beispielsweise mit Portalroboter(n) und Saugtraverse(n), umfasst.

Eine solche Werkstückbearbeitungsanlage verfügt erfindungsgemäß über eine erste elektrische Energieversorgungseinrichtung und eine zweite elektrische Energieversorgungseinrichtung. Die primäre elektrische Energieversorgungseinrichtung ist die erste elektrische Energieversorgungseinrichtung, denn diese stellt die für den normalen Betrieb der Werkstückbearbeitungsanlage notwendige elektrische Energie den einzelnen Komponenten der Werkstückbearbeitungsanlage zur Verfügung. Bei der ersten elektrischen Energieversorgungseinrichtung handelt es sich typischerweise um das öffentliche Stromnetz. Diese elektrische Energie wird beispielsweise zum Betreiben von elektronischen Steuer- und Regeleinrichtungen, beispielsweise in Form von Computern, zum Betreiben von pneumatischen und/oder hydraulischen Ventilen, zum Betreiben von Sensoren und Elektromotoren, zum Betreiben von Anzeigeeinrichtungen, etc., verwendet.

Die zweite elektrische Energieversorgungseinrichtung ist die sekundäre elektrische Energieversorgungseinrichtung, die lediglich bei einem Ausfall der ersten elektrischen Energieversorgungseinrichtung ("Stromausfall") zum Einsatz kommt. Beispielsweise kann die zweite elektrische Energieversorgungseinrichtung einen elektrischen Energiespeicher, beispielsweise in Form von Akkumulatoren bzw. aufladbaren Batterien, umfassen, und/oder ein Notstromaggregat, also beispielsweise einen Generator, der von einem Verbrennungsmotor angetrieben wird.

Durch die Bereitstellung von elektrischer Energie durch die zweite elektrische Energieversorgungseinrichtung kann bei einem Stromausfall ein vorgegebenes Notverfahren durchgeführt werden. Beispielsweise kann ein solches Notverfahren beinhalten, dass zumindest die oben erwähnten Steuer- und/oder Regeleinrichtungen (Computer) kontrolliert heruntergefahren werden, wodurch ein Datenverlust vermieden wird. Dabei können relevante Prozessdaten (beispielsweise ein aktueller Prozessschritt, etc.) abgespeichert und für eine nachfolgende Auswertung der weiteren Vorgehensweise während des Stromausfalls gesichert werden.

Erfindungsgemäß hängt mindestens ein Parameter, der das vorgegebene Notverfahren charakterisiert, von einer erwarteten zeitlichen Dauer des Stromausfalls ab. Dies bedeutet, dass sich das vorgegebene Notverfahren, welches angewendet wird, wenn die erwartete Dauer des Stromausfalls vergleichsweise kurz ist, von dem vorgegebenen Notverfahren, welches angewendet wird, wenn die erwartete Dauer des Stromausfalls vergleichsweise lange ist, unterscheidet. Realisiert werden kann dies beispielsweise dadurch, dass die erwartete Dauer des Stromausfalls mit einem Grenzwert oder mehreren Grenzwerten verglichen wird, wobei jedem entsprechenden durch den einen Grenzwert oder die mehreren Grenzwerte definierten Intervall ein entsprechendes Notverfahren zugeordnet ist, entsprechend dem die Werkstückbearbeitungsanlage bzw. zumindest ein Bereich der Werkstückbearbeitungsanlage betrieben wird. Der Grenzwert kann dabei so gewählt werden, dass dann, wenn die erwartete Dauer kleiner ist als der Grenzwert, noch eine bestimmte und optimierte Anzahl von Verfahrensschritten durchgeführt werden kann. Dabei besteht die Möglichkeit, dass der Grenzwert oder die Grenzwerte und/oder die Arten der entsprechenden Notverfahren vorab definiert werden, beispielsweise abhängig von der Ausführung bzw. dem Typ der Werkstückbearbeitungsanlage, und/oder vom Betreiber der Werkstückbearbeitungsanlage definiert werden. Ferner kann der Grenzwert auch vom Status der Werkstückbearbeitungsanlage abhängen, beispielsweise von einem Speicherfüllgrad der zweiten elektrischen Energieversorgungseinrichtung.

Die erwartete zeitliche Dauer muss zuvor ermittelt und einer Steuer- und/und Regeleinrichtung der Werkstückbearbeitungsanlage mitgeteilt worden sein. Beispielsweise kann sie dadurch ermittelt worden sein, dass über einen vorhergehenden Zeitraum während des Betriebs der Werkstückbearbeitungsanlage in der Vergangenheit die Häufigkeit und die Dauern von aufgetretenen Stromausfällen erfasst und als "historische" Daten abgespeichert wurden. Die erwartete zeitliche Dauer kann im einfachsten Falle durch die Bildung des arithmetischen Mittelwerts der in der Vergangenheit aufgetretenen Dauern der Ausfälle ermittelt werden.

Der Parameter, der das vorgegebene Notverfahren charakterisiert, ist erfindungsgemäß mindestens einer aus der folgenden Gruppe: Position eines durch die Werkstückbearbeitungsanlage durchgeführten Verfahrensschritts in einer Reihe von mehreren Verfahrensschritten, Anzahl von durch die Werkstückbearbeitungsanlage durchgeführten Verfahrensschritten, Geschwindigkeit und/oder Geschwindigkeitsverlauf der Ausführung mindestens eines durch die Werkstückbearbeitungsanlage durchgeführten Verfahrensschritts, Dauer mindestens eines durch die Werkstückbearbeitungsanlage durchgeführten Verfahrensschritts. Durch unterschiedliche Positionen von Verfahrensschritten kann beispielsweise erreicht werden, dass bestimmte Verfahrensschritte abhängig von der erwarteten Dauer des Ausfalls priorisiert werden. Bei einer längeren erwarteten Dauer kann ferner eine größere Anzahl an Verfahrensschritten ausgeführt werden als bei einer geringeren erwarteten Dauer. Denkbar ist aber auch, dass bei einer längeren erwarteten Dauer eine geringere Anzahl an Verfahrensschritten ausgeführt wird, um Energie zu sparen und so über die erwartete längere Dauer des Stromausfalls gewisse Grundfunktionen sicherzustellen.

Beispielsweise kann bei einer erwarteten längeren Dauer des Ausfalls die Werkstückbearbeitungsanlage oder ein Teil hiervon in einen Energiesparzustand versetzt werden, was bei einer erwarteten kürzeren Dauer des Ausfalls nicht notwendig sein kann. Besonders wirksam im Hinblick auf den Energieverbrauch ist ferner eine Anpassung der Geschwindigkeit und/oder des Geschwindigkeitsverlauf der Ausführung eines Verfahrensschritts. Durch verringerte Geschwindigkeiten und/oder Beschleunigungen angetriebener Teile kann der Energieverbrauch gesenkt und die Dauer des Betriebs des Notverfahrens verlängert werden.

Bei einer Weiterbildung ist vorgesehen, dass das Notverfahren umfasst: Bereitstellen von elektrischer Energie durch die zweite Energieversorgungseinrichtung an eine Sicherheitseinrichtung der Werkstückbearbeitungsanlage. Die Fortsetzung des Betriebs der Sicherheitseinrichtung der Werkstückbearbeitungsanlage bei einem Stromausfall wird also priorisiert. Beispielsweise kann die Werkstückbearbeitungsanlage (bzw. auch nur ein Bereich der Werkstückbearbeitungsanlage) als Sicherheitseinrichtung eine Überwachung eines Bereichs der Werkstückbearbeitungsanlage auf das Vorhandensein von Personen umfassen. Dieser Bereich kann beispielsweise eine Werkstückzuführeinrichtung umfassen. In diesem Fall würde der Sicherheitsbereich beispielsweise eine Werkstückbearbeitungseinrichtung und eine Werkstückzuführeinrichtung der Werkstückbearbeitungsanlage umfassen.

Eine solche Sicherheitseinrichtung kann beispielsweise Begehungslichtschranken und/oder Begehungstüren umfassen, und/oder Kameras und Einrichtungen zur Bilderkennung und - auswertung. Auch der Einsatz beispielsweise eines Sicherheits-Laserscanners und/oder von Sicherheit-Schaltmatten wäre denkbar. Ein weiterer Betrieb der Werkstückbearbeitungsanlage wäre vollständig verboten, wenn eine solche Sicherheitseinrichtung nicht mehr arbeiten würde. Voraussetzung für die Möglichkeit, die Werkstückbearbeitungsanlage mit einem Notverfahren zu betreiben, ist also eine aktive Sicherheitseinrichtung. Durch die erfindungsgemäße Maßnahme wird folglich die Voraussetzung geschaffen, die Werkstückbearbeitungsanlage oder zumindest einen Teil von dieser während des Notverfahrens weiter betreiben zu können. Eine Notabschaltung der gesamten Werkstückbearbeitungsanlage ist somit nicht notwendig.

Bei einer Weiterbildung ist vorgesehen, dass die Werkstückbearbeitungsanlage mindestens eine Werkstückbearbeitungseinrichtung zum Bearbeiten von Werkstücken und eine Werkstückzuführeinrichtung zum Zuführen von Werkstücken zu der Werkstückbearbeitungseinrichtung umfasst, und dass bei einer erwarteten ersten und vergleichsweise langen Dauer des Ausfalls der ersten elektrischen Energieversorgung das Notverfahren umfasst: Beenden einer, vorzugsweise einer vor dem Stromausfall begonnenen und zu Beginn des Stromausfalls andauernden, Bewegung eines Werkstücks durch die Werkstückzuführeinrichtung durch ein gesteuertes Ablegen des Werkstücks. Dies setzt voraus, dass die Werkstückzuführeinrichtung während des Notverfahrens weiterhin und vollständig mit elektrischer Energie von der zweiten elektrischen Energieversorgungseinrichtung versorgt wird.

Bei der Werkstückbearbeitungseinrichtung handelt es sich um eine Plattenaufteilsäge der eingangs beschriebenen Art. Bei der Werkstückzuführeinrichtung kann es sich um ein Flächenlager ebenfalls der eingangs beschriebenen Art handeln. Durch die erfindungsgemäße Maßnahme wird sichergestellt, dass dann, wenn die erwartete Dauer des Stromausfalls länger ist als die mögliche Dauer der Bereitstellung von elektrischer Energie durch die zweite elektrische Energieversorgungseinrichtung, in der Zuführung befindliche Werkstücke nicht unkontrolliert freigegeben werden, wenn keine elektrische Energie mehr zur Verfügung steht, sondern die Werkstückzuführeinrichtung kontrolliert in einen sicheren Zustand gebracht wird, in dem sie verharren kann, bis wieder elektrische Energie zur Verfügung steht.

Hierzu kann zunächst eine Auswertung daraufhin durchgeführt werden, welche vorgesehenen Verfahrensschritte mit der während der erwarteten Dauer des Ausfalls zur Verfügung stehenden elektrischen Energie noch durchgeführt werden können. Es wird somit beim Auftreten eines Stromausfalls der aktuelle Zustand der Werkstückbearbeitungsanlage einschließlich der aktiven Aufträge der Werkstückbearbeitungseinrichtung und der Werkstückzuführeinrichtung ausgewertet und auf der Basis der Auswertung "intelligent" auf den Stromausfall reagiert. Erreicht die Kapazität der zweiten elektrischen Stromversorgungseinrichtung während eines anstehenden Stromausfalls einen kritischen Bereich, wird hierauf entsprechend reagiert. Beispielsweise kann eine Steuer-und/oder Regeleinrichtung der Werkstückzuführeinrichtung kontrolliert heruntergefahren werden, und es können die aktuellen Prozessdaten gesichert werden.

Bei einer Weiterbildung hierzu ist vorgesehen, dass das Notverfahren umfasst: Versetzen der Werkstückzuführeinrichtung nach dem gesteuerten Ablegen des Werkstücks in einen energiesparenden Zustand. Hierdurch wird der Zeitraum, der notwendig ist, um die Werkstückzuführeinrichtung nach einem Stromausfall wieder "hochzufahren", verringert. Ist der Stromausfall zu Ende, kann die Werkstückzuführeinrichtung ohne Eingriff durch eine Bedienperson automatisch wieder in den Normalzustand übergehen und das Zuführen von Werkstücken unverzüglich fortsetzen.

Bei einer Weiterbildung ist vorgesehen, dass die Werkstückbearbeitungsanlage mindestens eine Werkstückbearbeitungseinrichtung zum Bearbeiten von Werkstücken und eine Werkstückzuführeinrichtung zum Zuführen von Werkstücken zu der Werkstückbearbeitungseinrichtung umfasst, und dass bei einer erwarteten zweiten und vergleichsweise kurzen Dauer des Ausfalls der ersten elektrischen Energieversorgung das Notverfahren umfasst: Fortsetzen einer vor dem Ausfall begonnenen Bewegung eines Werkstücks durch die Werkstückzuführeinrichtung, welches nicht die Werkstückbearbeitungseinrichtung als Quelle oder als Ziel hat, wie vor dem Ausfall vorgesehen. Hierdurch wird der Tatsache Rechnung getragen, dass typischerweise die Werkstückbearbeitungseinrichtung, also beispielsweise die Plattenaufteilsäge, von der zweiten elektrischen Energieversorgung nicht so mit elektrischer Energie versorgt wird, dass diese weiter betrieben werden könnte. Typischerweise wird lediglich eine Steuer- und/oder Regeleinrichtung der Werkstückbearbeitungseinrichtung noch so mit elektrischer Energie versorgt, dass diese kontrolliert und unter Speicherung wichtiger aktueller Betriebsdaten heruntergefahren werden kann.

Es ist daher möglich, dass bei einem Ausfall der ersten elektrischen Energieversorgungseinrichtung die Werkstückbearbeitungseinrichtung nicht in einem Zustand ist, in dem sie ein zugeführtes Werkstück aufnehmen kann. Gleichwohl können bei einer kurzen erwarteten Dauer des Stromausfalls andere bereits begonnene Aktivitäten der Werkstückzuführeinrichtung wie geplant durchgeführt und beendet und insoweit fortgesetzt werden. Der Zeitraum während des Stromausfalls ist daher bei dieser Weiterbildung nicht vollständig unproduktiv.

Eine Ausnahme bildet jedoch der Fall, dass der Stromausfall eintritt, während die Werkstückzuführeinrichtung gerade dabei ist, ein Werkstück in der Werkstückbearbeitungseinrichtung abzusetzen. In diesem Fall kann davon ausgegangen werden, dass die Werkstückbearbeitungseinrichtung in einem Zustand ist, in dem sie das zugeführte Werkstück aufnehmen kann. Somit kann in diesem Ausnahmefall der Verfahrensschritt beendet werden, also das Werkstück in der Werkstückbearbeitungseinrichtung abgesetzt werden.

Bei einer Weiterbildung hierzu (erwarteter kurzer Stromausfall) ist vorgesehen, dass mindestens eine nach Beginn und während des Stromausfalls und somit während des Notverfahrens zu beginnende Bewegung mindestens im Wesentlichen unverändert durchgeführt wird. Auch dies führt zu einer produktiven Nutzung des Zeitraums des Stromausfalls und damit insgesamt zu einer Erhöhung der Produktivität der Werkstückbearbeitungsanlage.

Bei einer Weiterbildung hierzu ist vorgesehen, dass die Bewegung eine ist aus der folgenden Gruppe: Einlagern eines Werkstücks, Umlagern eines Werkstücks, Freimachen eines Ortes von Werkstücken, Vorauslagern eines Werkstücks. Dies sind besonders wichtige Bewegungen einer Werkstückzuführeinrichtung.

Bei einer Weiterbildung ist vorgesehen, dass eine Bewegung der Werkstückzuführeinrichtung, die die Werkstückbearbeitungseinrichtung als Quelle oder als Ziel hat, während des Notverfahrens nicht begonnen wird. Es werden also alle Bewegungen der Werkstückzuführeinrichtung, die nicht die Werkstückbearbeitungseinrichtung als Quelle oder als Ziel haben, uneingeschränkt fortgesetzt. Hierdurch wird der Tatsache Rechnung getragen, dass typischerweise die Werkstückbearbeitungseinrichtung während eines Stromausfalls nicht betriebsbereit ist. Aufträge mit einer Werkstückbearbeitungseinrichtung als Quelle oder Ziel werden daher nicht begonnen, und somit wird die Werkstückzuführeinrichtung nicht durch solche Aufträge blockiert. Sobald die Werkstückbearbeitungseinrichtung wieder betriebsbereit ist, kann dies automatisch durch eine Steuer- und/oder Regeleinrichtung der Werkstückzuführeinrichtung erkannt werden, und vorhandene Aufträge können dann eigenständig weiter ausgeführt werden.

Bei einer Weiterbildung ist vorgesehen, dass vorgesehene und noch nicht begonnene Bewegungen von Werkstücken mit der Werkstückbearbeitungseinrichtung als Ziel automatisch umgewandelt werden in Bewegungen zu einem vorzugsweise in der Nähe der Werkstückbearbeitungseinrichtung angeordneten Zwischenlagerplatz, wobei die Werkstücke am Zwischenlagerplatz vorzugsweise in umgekehrter Produktionsreihenfolge abgelegt werden. Somit werden während eines Stromausfalls nicht mehr mögliche Bewegungen von Werkstücken in noch mögliche Bewegungen von Werkstücken umgewandelt. Hierdurch wird nochmals die Produktivität der Werkstückbearbeitungsanlage insgesamt verbessert. Der Zwischenlagerplatz befindet sich vorzugsweise in der Nähe der Werkstückbearbeitungseinrichtung, so dass dann, wenn der Stromausfall beendet und die Werkstückbearbeitungseinrichtung beispielsweise durch eine Bedienperson wieder in Betrieb genommen worden ist, die am Zwischenlagerplatz befindlichen Werkstücke in geringer Zeit der Werkstückbearbeitungseinrichtung zugeführt werden können. Dieser Modus kann auch über das Ende des Stromausfalls hinaus verlängert werden, bis die Werktsückbearbeitungseinrichtung wieder betriebsbereit ist (beispielsweise müssen Werkstücke aus der Werkstückbearbeitungsanlage herausgenommen werden, die Werkstückbearbeitungseinrichtung muss neu referenziert werden, o.ä.).

Bei einer Weiterbildung ist vorgesehen, dass dann, wenn eine vor dem Ausfall begonnene Bewegung eines Werkstücks durch die Werkstückzuführeinrichtung die Werkstückbearbeitungseinrichtung als Ziel hat und sich die Werkstückbearbeitungseinrichtung nicht in einem Zustand befindet, in dem sie das Werkstück aufnehmen kann, die Bewegung zu der Werkstückbearbeitungseinrichtung als Ziel abgebrochen und das Werkstück auf einem Zwischenlagerplatz abgelegt wird. Auch in diesem Fall befindet sich der Zwischenlagerplatz vorzugsweise in der Nähe der Werkstückbearbeitungseinrichtung. Diese Maßnahme sorgt für eine erhöhte Zuverlässigkeit und Sicherheit im Betrieb der Werkstückbearbeitungsanlage.

Bei einer Weiterbildung ist vorgesehen, dass geprüft wird, ob ein zu Beginn des Notverfahrens gerade durch die Werkstückbearbeitungseinrichtung bearbeitetes Werkstück von der Werkstückzuführeinrichtung nochmals bereitgestellt werden muss oder nach dem Ende des Notverfahrens weiterbearbeitet werden kann. Dies kann beispielsweise dadurch ermöglicht werden, dass die Werkstückbearbeitungseinrichtung der Werkstückzuführeinrichtung selbstständig und noch bevor sie aufgrund des Stromausfalls abgeschaltet wird eine entsprechende Information bereitstellt. Somit kann, falls erforderlich, noch während des Stromausfalls durch die Werkstückzuführeinrichtung ein entsprechendes neues Werkstück bereitgestellt werden, beispielsweise auf einem in der Nähe der Werkstückbearbeitungseinrichtung liegenden Zwischenlagerplatz abgelegt werden. Die Inbetriebnahme der Werkstückbearbeitungsanlage nach einem Stromausfall wird auf diese Weise nochmals beschleunigt.

Zusammenfassend kann somit bei der vorliegenden Erfindung davon ausgegangen werden, dass nach einem Stromausfall relevante Produktionsdaten sowie ein Zustand der Werkstückbearbeitungsanlage gesichert und ausgewertet werden. Nach Beginn des Stromausfalls wird ein zu Beginn des Stromausfalls ausgeführter Verfahrensschritt durch in einen alternativen Verfahrensschritte umgewandelt, wodurch bessere Voraussetzungen für Wiederaufnahme der Werkstückbearbeitungsanlage geschaffen werden. Beispielsweise kann bei einem Strommausfall eine Werkstückposition, ein Abarbeitungsstatus in einer Werkstückbearbeitungseinrichtung sowie die gesamte Werkstückbearbeitungsanlage selbst entsprechend der gesicherten Daten geprüft und ein aktueller Verfahrensschritt fortgesetzt oder durch einen alternativen Verfahrensschritt oder alternative Verfahrensschritte ersetzt werden.

Beispielsweise können gesicherte Daten bzgl. Werkstückposition, Abarbeitungsstatus (beispielsweise Position in einem Schnittplan einer Plattenaufteilsäge), Identifikation von gemäß einem aktuellen Schnittplan vor dem Stromausfall produzierten Werkstücken, Position eines Werkzeugs der Werkstückbearbeitungseinrichtung zum Zeitpunkt des Stromausfalls, Position des Werkstücks zum Zeitpunkt des Stromausfalls, Wiederverwendung des Werkstücks, Vollständigkeit der Sicherung nach dem Stromausfall ausgewertet werden.

Auch können die Verfahrensschritte abhängig von einer Kapazität der zweiten elektrischen Energieversorgungseinrichtung festgelegt werden. Abhängig von in der Vergangenheit stattgefunden Stromausfällen (Häufigkeit, Dauer) werden unterschiedliche Aktionen bzw. Szenarien eingeleitet: beispielsweise bei einem Stromausfall dreimal pro Monat für weniger als eine Minute werden der laufende Verfahrensschritt bzw. eine angefangene Bewegung eines Werkstücks abgeschlossen. Kommt es dagegen beispielsweise alle zwei Wochen für mindestens 15 Minuten zu einem Stromausfall, wird die Werkstückzuführeinrichtung bei einem Stromausfall in einen sicheren Zustand gebracht, und der Betrieb der Werkstückbearbeitungseinrichtung wird gestoppt.

Nachfolgend wird eine Ausführungsform der Erfindung unter Bezugnahme auf die beigefügte Zeichnung erläutert. In dieser zeigen:
- Figur 1: eine schematische Darstellung einer Werkstückbearbeitungsanlage; und
- Figur 2: ein Flussdiagramm eines Verfahrens zum Betreiben der Werkstückbearbeitungsanlage von Figur 1.

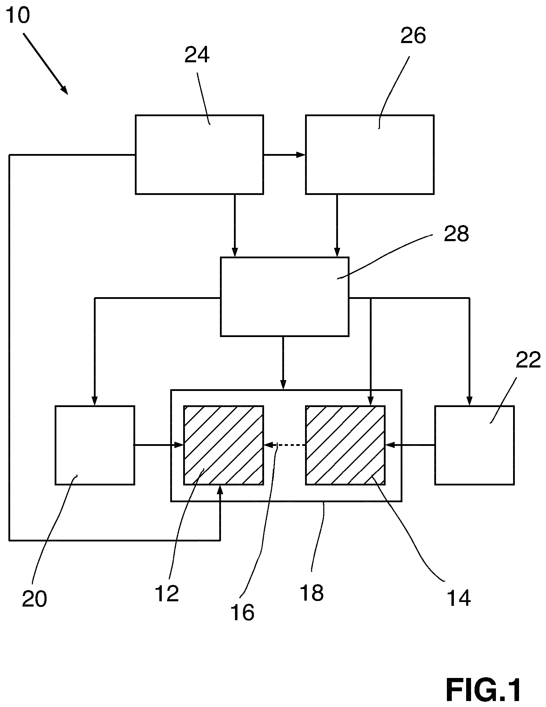

Eine Werkstückbearbeitungsanlage trägt in Figur 1 insgesamt das Bezugszeichen 10. Sie umfasst vorliegend eine Werkstückbearbeitungseinrichtung 12 sowie eine Werkstückzuführeinrichtung 14. Bei einer nicht dargestellten Ausführungsform umfasst die Werkstückbearbeitungsanlage eine Mehrzahl von Werkstückbearbeitungseinrichtungen.

Vorliegend handelt es sich bei der Werkstückbearbeitungseinrichtung 12 um eine Einrichtung zum Bearbeiten von plattenförmigen Werkstücken, wie sie beispielsweise zur Herstellung von Möbeln verwendet werden. Bei der Werkstückbearbeitungseinrichtung 12 handelt es sich um eine Plattenaufteilsäge.

Beispielhaft handelt es sich ferner vorliegend bei der Werkstückzuführeinrichtung 14 um ein sogenanntes "Flächenlager". Ein solches umfasst typischerweise mehrere Lagerplätze für großformatige plattenförmige Werkstücke sowie einen oder mehrere Roboter, beispielsweise einen Portalroboter. Ein solcher Roboter kann wiederum eine sogenannte "Saugtraverse" umfassen, bei der es sich um eine Struktur handelt mit einer Mehrzahl von Vakuum-Saugnäpfen. Diese können an einer Oberseite eines plattenförmigen Werkstücks angreifen, wodurch der Roboter das plattenförmige Werkstück anheben, zu einem bestimmten Ziel transportieren und dort ablegen kann.

Vorliegend beispielhaft führt die Werkstückzuführeinrichtung 14 plattenförmige Werkstücke der Werkstückbearbeitungseinrichtung 12 zu (Pfeil 16 in Figur 1), damit diese dort bearbeitet, beispielsweise durch Sägen aufgeteilt werden können. Die Werkstückbearbeitungseinrichtung 12 ist also das "Ziel" der Werkstückzuführeinrichtung 14. Ferner kann die Werkstückzuführeinrichtung 14 dazu dienen, nur zum Teil durch die Werkstückbearbeitungseinrichtung 12 bearbeitete Werkstücke von dort wieder zurückzunehmen und auf einem Lagerplatz der Werkstückzuführeinrichtung 14 ("Zwischenlagerplatz") zwischenzulagern, bis das zwischengelagerte Werkstück der Werkstückbearbeitungseinrichtung 12 für eine weitere Bearbeitung zugeführt werden kann. In diesem Fall ist die Werkstückbearbeitungseinrichtung 12 die "Quelle" der Werkstückzuführeinrichtung 14.

Um sicherzustellen, dass während des Betriebs der Werkstückbearbeitungsanlage 10 Personen nicht zu Schaden kommen, verfügt die Werkstückbearbeitungsanlage 10 über eine Sicherheitseinrichtung 18. Diese kann beispielsweise einen Zaun umfassen mit Begehungslichtschranken und Begehungstüren. Ferner kann die Sicherheitseinrichtung 18 eine oder mehrere Videokameras und/oder Sicherheits-Laserscanner umfassen, welche den Bereich der Werkstückbearbeitungseinrichtung 12 und der Werkstückzuführeinrichtung 14 beobachten, und welche die Signale an eine Bilderfassung bzw. Bildauswertung übertragen. Mit Hilfe der Sicherheitseinrichtung 18 kann ein Betrieb der Werkstückbearbeitungseinrichtung 12 und/oder der Werkstückzuführeinrichtung 14 automatisch gestoppt und/oder gesperrt werden, wenn durch die Sicherheitseinrichtung 18 festgestellt wird, dass sich eine Person im Bereich der Werkstückbearbeitungseinrichtung 12 und/oder der Werkstückzuführeinrichtung 14 befindet. Bei der hier gezeigten Ausführungsform überwacht die Sicherheitseinrichtung 18 insgesamt die Werkstückbearbeitungsanlage 10, also sowohl die Werkstückbearbeitungseinrichtung 12 als auch die Werkstückzuführeinrichtung 14**.** Bei einer nicht gezeigten Ausführungsform verfügen die Werkstückbearbeitungseinrichtung und die Werkstückzuführeinrichtung jeweils über separate Sicherheitseinrichtungen. Diese können dann einen gemeinsamen Sicherheitsbereich bilden.

Der Betrieb der Werkstückbearbeitungseinrichtung 12 wird durch eine Steuer- und Regeleinrichtung 20 gesteuert und geregelt. Bei der Steuer- und Regeleinrichtung 20 kann es sich beispielsweise um einen Computer mit einem Mikroprozessor, einem Speicher, auf dem Speicher gespeicherter Software, Eingabegeräten (beispielsweise Tastatur, Maus, Mikrofon, etc.) und Ausgabegeräten (beispielsweise Bildschirm, Lautsprecher, Laserpointern, Lichtleiste, etc.) handeln. Analog hierzu kann der Betrieb der Werkstückzuführeinrichtung 14 durch eine Steuer- und Regeleinrichtung 22 gesteuert und geregelt werden, welche ebenfalls beispielsweise als Computer der gerade eben beschriebenen Art ausgebildet sein kann. Die beiden Steuer-und Regeleinrichtungen 20 und 22 können miteinander kommunizieren, so dass die Werkstückbearbeitungseinrichtung 12 und die Werkstückzuführeinrichtung 14 in einer aufeinander abgestimmten Art und Weise betrieben werden können.

Zu der Werkstückbearbeitungsanlage 10 gehört auch eine Energieversorgung. Diese umfasst vorliegend beispielhaft eine erste elektrische Energieversorgungseinrichtung 24 und eine zweite elektrische Energieversorgungseinrichtung 26. Die erste elektrische Energieversorgungseinrichtung 24 ist die primäre elektrische Energieversorgungseinrichtung, denn diese stellt den einzelnen Komponenten der Werkstückbearbeitungsanlage 10 die für den normalen Betrieb der Werkstückbearbeitungsanlage 10 notwendige elektrische Energie zur Verfügung. Bei der ersten elektrischen Energieversorgungseinrichtung 24 handelt es sich typischerweise um das öffentliche Stromnetz.

Die zweite elektrische Energieversorgungseinrichtung 26 ist die sekundäre elektrische Energieversorgungseinrichtung, die lediglich bei einem Ausfall der ersten elektrischen Energieversorgungseinrichtung 24 ("Stromausfall") zum Einsatz kommt. Beispielsweise kann die zweite elektrische Energieversorgungseinrichtung 26 einen elektrischen Energiespeicher, beispielsweise in Form von Akkumulatoren bzw. aufladbaren Batterien, umfassen, und/oder ein Notstromaggregat, also beispielsweise einen Generator, der von einem Verbrennungsmotor angetrieben wird.

Die erste elektrische Energieversorgungseinrichtung 24 ist vorzugsweise einerseits mit der zweiten elektrischen Energieversorgungseinrichtung 26 verbunden, um beispielsweise dort vorhandene elektrische Energiespeicher laden zu können. Andererseits ist die erste elektrische Energieversorgungseinrichtung 24 mit einem Eingang eines Doppeleinspeisemoduls 28 verbunden, welches eingangsseitig auch mit der zweiten elektrischen Energieversorgungseinrichtung 26 verbunden ist. Die erste elektrische Energieversorgungseinrichtung 24 ist ferner direkt mit der Werkstückbearbeitungseinrichtung 12 verbunden. Auf diese Weise stellt die erste elektrische Energieversorgungseinrichtung 24 im Normalbetrieb der Werkstückbearbeitungsanlage 10 die elektrische Versorgung der einzelnen Komponenten der Werkstückbearbeitungseinrichtung 12 unmittelbar sicher. Zu diesen Komponenten gehören beispielsweise Elektromotoren, elektromagnetisch angesteuerte Ventile, etc.

Das Doppeleinspeisemodul 28 ist ausgangsseitig sowohl mit der Steuer- und Regeleinrichtung 20 der Werkstückbearbeitungseinrichtung 12 als auch mit der Steuer- und Regeleinrichtung 22 der Werkstückzuführeinrichtung 14 verbunden. Außerdem wird über das Doppeleinspeisemodul 28 die Sicherheitseinrichtung 18 mit elektrischer Energie versorgt, sowie die Werkstückzuführeinrichtung 14 bzw. deren einzelne Komponenten. Auch hierbei handelt es sich typischerweise um Elektromotoren, elektromagnetisch angesteuerte Ventile, etc.

Im Normalbetrieb erhält das Doppeleinspeisemodul 28 die elektrische Energie von der ersten elektrischen Energieversorgungseinrichtung 24. Bei einem Ausfall der ersten elektrischen Energieversorgungseinrichtung 24 (Stromausfall) erhält das Doppeleinspeisemodul 28 die elektrische Energie von der zweiten elektrischen Energieversorgungseinrichtung 26. Bei einem solchen Stromausfall können somit die beiden Steuer- und Regeleinrichtungen 20 und 22, die Sicherheitseinrichtung 18 und die Werkstückzuführeinrichtung 14 weiterhin über die zweite elektrische Energieversorgungseinrichtung 26 und das Doppeleinspeisemodul 28 mit elektrischer Energie versorgt werden.

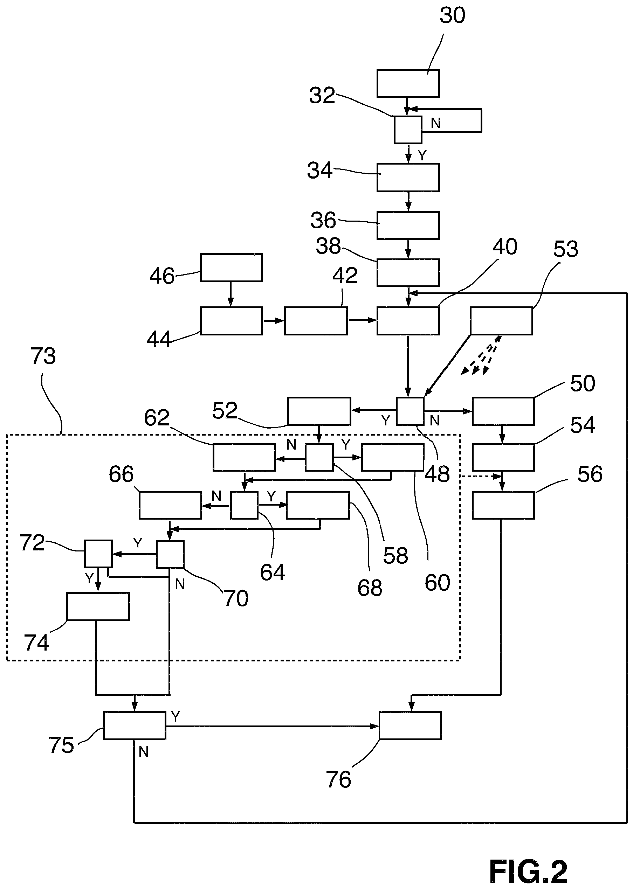

Während einer Bereitstellung von elektrischer Energie durch die zweite Energieversorgungseinrichtung 26 (Stromausfall) werden vorgegebene Notverfahren ausgeführt. Ein Beispiel für solche Notverfahren wird nun unter Bezugnahme auf Figur 2 stärker im Detail erläutert.

Das in Figur 2 dargestellte Verfahren beginnt in einem Startblock 30. Danach wird in einem Funktionsblock 32 abgefragt, ob die Stromversorgung durch die erste elektrische Energieversorgungseinrichtung 24 ausgefallen ist, also ein Stromausfall vorliegt. Ist die Antwort im Funktionsblock 32 "Jahr", wird in einem Funktionsblock 34 das Doppeleinspeisemodul 28 eingangsseitig auf die zweite elektrische Energieversorgungseinrichtung 26 umgeschaltet und die zweite elektrische Energieversorgungseinrichtung 26 eingeschaltet. Ab diesem Moment werden somit die beiden Steuer- und Regeleinrichtungen 20 und 22, die Sicherheitseinrichtung 18 und die Werkstückzuführeinrichtung 14 mit elektrischer Energie von der zweiten elektrischen Energieversorgungseinrichtung 26, also der "Notstromversorgung" versorgt.

Unmittelbar nach Beginn des Stromausfalls wird ferner in einem Funktionsblock 36 eine Datensicherung initialisiert. Es werden somit in den beiden Steuer-und Regeleinrichtungen 20 und 22 alle aktuellen Prozessdaten in jeweiligen nichtflüchtigen Speichern abgespeichert. Zu den aktuellen Prozessdaten gehören beispielsweise relevante Produktionsdaten und der aktuelle Zustand der gesamten Werkstückbearbeitungsanlage 10, einschließlich einer Definition der zu Beginn des Stromausfalls "aktiven Aufträge" der Werkstückzuführeinrichtung 14 und der Werkstückbearbeitungseinrichtung 12.

Die abgespeicherten Prozessdaten können dazu verwendet werden, unmittelbar notwendige Maßnahmen zu ergreifen und/oder einen weiteren Betrieb zumindest der Werkstückzuführeinrichtung 14 anzupassen bzw. zu ermöglichen. Ebenso können die abgespeicherten Prozessdaten später dazu verwendet werden, die Werkstückbearbeitungseinrichtung 12 wieder kontrolliert und schnellstmöglich in Betrieb zu nehmen. Vorzugsweise wird die Steuer- und Regeleinrichtung 20 der Werkstückbearbeitungseinrichtung 12 im Funktionsblock 36 kontrolliert heruntergefahren. Dies hat zur Folge, dass die Werkstückbearbeitungseinrichtung 12 nicht mehr betriebsbereit ist. Weiterhin ist es möglich, die Werkstückbearbeitungseinrichtung kontrolliert in einen sicheren Zustand zu bringen und in einen Stand-by-Modus zu schalten, um sie nach dem Ende des Stromausfalls schnellstmöglich wieder in Betrieb nehmen zu können.

In einem Funktionsblock 38 wird sichergestellt, dass die Sicherheitseinrichtung 18 weiterhin in Betrieb ist. Wie im Zusammenhang mit Figur 1 erläutert wurde, wird dies unter anderem dadurch sichergestellt, dass die Sicherheitseinrichtung 18 vom Doppeleinspeisemodul 28 mit elektrischer Energie versorgt wird. Vorteilhafterweise verfügt die Sicherheitseinrichtung 18 über eine eigene Steuer- und Regeleinrichtung (vorliegend nicht dargestellt). Wenn, wie nachfolgend gezeigt werden wird, auch während eines Stromausfalls die Werkstückzuführeinrichtung 14 noch weiter betrieben wird, wird durch den weiteren Betrieb der Sicherheitseinrichtung 18 gleichwohl sichergestellt, dass sich bei diesem Betrieb keine Personen im Bereich der Werkstückzuführeinrichtung 14 befinden und dort zu Schaden kommen können.

In einem Funktionsblock 40 wird eine erwartetet Dauer des Ausfalls der ersten elektrischen Energieversorgungseinrichtung 24 abgerufen. Diese erwartete Dauer wird in einem Funktionsblock 42 bereitgestellt. Die erwartete Dauer des Stromausfalls wird auf der Basis von historischen Daten ermittelt, die in einem Funktionsblock 44 zur Verfügung gestellt werden. Die historischen Daten im Funktionsblock 44 basieren wiederum auf in der Vergangenheit aufgetretenen Stromausfällen (Funktionsblock 46) und können sowohl die früher aufgetretenen Dauern als auch deren Zeitpunkte sowie weitere Begleitumstände umfassen. Beispielsweise können über einen vorhergehenden Zeitraum während des Betriebs der Werkstückbearbeitungsanlage 10 in der Vergangenheit die Häufigkeit und die Dauern von aufgetretenen Stromausfällen erfasst und als die besagten "historischen" Daten im Funktionsblock 44 abgespeichert worden sein.

Die erwartete zeitliche Dauer kann im Funktionsblock 42 im einfachsten Falle durch die Bildung des arithmetischen Mittelwerts der in der Vergangenheit aufgetretenen Dauern der Ausfälle ermittelt werden. Bei der Ermittlung der erwarteten Dauer des Stromausfalls können jedoch noch weitere Parameter berücksichtigt werden. Beispielsweise können die Tageszeit und/oder der Wochentag die erwartete Dauer des Stromausfalls beeinflussen. Beispielsweise kann es sein, dass an bestimmten Wochentagen und/oder zu bestimmten Tageszeiten eher längere und an anderen Wochentagen und/oder Tageszeiten eher kürzere Stromausfälle zu erwarten sind. Auch dies kann im Funktionsblock 42 berücksichtigt werden.

In einem Vergleichsblock 48 wird abgefragt, ob die im Funktionsblock 40 abgerufene erwartete Dauer des Stromausfalls kleiner ist als ein Grenzwert. Ist dies nicht der Fall (Antwort "Nein"), wird in einem Funktionsblock 50 eine erste Variante eines Notverfahrens eingeleitet. Ist dagegen die abgerufene erwartetet Dauer des Stromausfalls kleiner als der Grenzwert (Antwort "Ja"), wird in einem Funktionsblock 52 eine zweite Variante eines Notverfahrens eingeleitet.

Der Grenzwert kann fest vorgegeben sein, beispielsweise abhängig von der maximalen Kapazität der zweiten elektrischen Energieversorgungseinrichtung 26. Der Grenzwert kann auch vom Betreiber der Werkstückbearbeitungsanlage 10 abhängig von der individuellen Konfiguration der Werkstückbearbeitungsanlage 10 festgelegt werden. Auch die konkreten Inhalte der beiden Notverfahren 50 und 52 können vom Betreiber individuell definiert werden.

Möglich ist aber auch, dass der aktuelle Speicherfüllgrad der zweiten elektrischen Energieversorgungseinrichtung 26 als Kenngröße verwendet wird, um den Grenzwert zu definieren. Hierdurch kann erreicht werden, dass bei einem geringen Speicherfüllgrad der zweiten elektrischen Energieversorgungseinrichtung 26 häufiger eine eher sicherere Variante eines Notverfahrens eingeleitet wird. Dies ist in Figur 2 durch einen Funktionsblock 53 angedeutet, der den aktuellen Speicherfüllgrad als Kenngröße in den Vergleichsblock 48 einspeist. In diesem Fall werden im Vergleichsblock 48 also zwei Bedingungen abgeprüft, nämlich ein Verhältnis zwischen erwarteter Dauer des Stromausfalls und einem Grenzwert, und ein Verhältnis zwischen aktuellem Füllgrad der zweiten elektrischen Energieversorgungseinrichtung 26 und einem Grenzwert.

Der im Funktionsblock 53 bereitgestellte Speicherfüllgrad kann jedoch nicht nur zur Definition des Grenzwerts im Vergleichsblock 48 verwendet werden, sondern noch an zahlreichen weiteren Stellen im Verlauf der beiden Notverfahren 50 und 52. Dies ist durch gestrichelte Pfeile, die vom Funktionsblock 53 ausgehen, angedeutet. Beispielsweise kann vor sicherheitsrelevanten Verfahrensschritten oder auch vor jedem Verfahrensschritt, bei dem ein Werkstück gehandhabt wird, geprüft werden, ob der Speicherfüllgrad der zweiten elektrischen Energieversorgungseinrichtung 26 ausreicht, um den Verfahrensschritt ausführen und abschließen zu können. Es wird also der voraussichtliche Energiebedarf für die Ausführung eines Verfahrensschritts mit der noch zur Verfügung stehenden Energie in der zweiten elektrischen Energieversorgungseinrichtung 26 verglichen.

Nur dann, wenn festgestellt wird, dass der Speicherfüllgrad ausreicht, um den geplanten Verfahrensschritt (gegebenenfalls mit einem gewissen Sicherheitspuffer) ausführen und abschließen zu können, wird der Verfahrensschritt überhaupt begonnen. Wird dagegen festgestellt, dass der Speicherfüllgrad nicht oder nicht sicher ausreicht, um den geplanten Verfahrensschritt ausführen zu können, wird entweder ein anderer, weniger energieintensiver Verfahrensschritt geplant, oder wird die Werkstückbearbeitungsanlage 10 bzw. der betroffene Teilbereich, beispielsweise die Werkstückbearbeitungseinrichtung 12 und/oder die Werkstückzuführeinrichtung 14, in einen sicheren Betriebszustand gebracht. Beispielsweise wird ein bereits gegriffenes Werkstück an einer sicheren Stelle abgelegt. Die erste Variante (Funktionsblock 50) des Notverfahrens wird somit dann ausgeführt, wenn die erwartete Dauer des Stromausfalls relativ lang ist. Die zweite Variante (Funktionsblock 52) des Notverfahrens wird dagegen dann ausgeführt, wenn die erwartete Dauer des Stromausfalls vergleichsweise kurz ist. Ein typischer Wert für eine kurze Dauer eines Stromausfalls liegt im Bereich von wenigen Minuten, insbesondere im Bereich von 1-5 Minuten. Ein typischer Wert für eine lange Dauer eines Stromausfalls liegt im Bereich von ungefähr 15 Minuten und mehr. Vorliegend beispielhaft könnte der Grenzwert zum Beispiel auf 6 Minuten festgelegt werden.

Die beiden Varianten der Notverfahren unterscheiden sich durch mindestens einen Parameter. Bei dem in Figur 2 gezeigten Verfahren ist es somit so, dass mindestens ein Parameter, der das vorgegebene Notverfahren (Funktionsblöcke 50 und 52) charakterisiert, von einer erwarteten Dauer des Ausfalls der ersten elektrischen Energieversorgungseinrichtung 24 abhängt. Wie nachfolgend gezeigt werden wird, können die Notverfahren sich in ganz unterschiedlichen Parametern unterscheiden. Zu diesen Parametern gehören: Position eine: durch die Werkstückbearbeitungsanlage durchgeführten Verfahrensschritts in einer Reihe von mehreren Verfahrensschritten, Anzahl von durch die Werkstückbearbeitungsanlage durchgeführten Verfahrensschritten, Geschwindigkeit und/oder Geschwindigkeitsverlauf (Beschleunigung) der Ausführung mindestens eines durch die Werkstückbearbeitungsanlage durchgeführten Verfahrensschritts, Dauer mindestens eines durch die Werkstückbearbeitungsanlage durchgeführten Verfahrensschritts.

Bei der ersten Variante des Notverfahrens, die im Funktionsblock 50 begonnen wird, wird in einem Funktionsblock 54 veranlasst, dass eine vor dem Stromausfall begonnene und während des Stromausfalls noch andauernde Bewegung eines Werkstücks durch die Werkstückzuführeinrichtung 14 durch ein gesteuertes Ablegen des Werkstücks beispielsweise auf einem Zwischenlagerplatz beendet wird. Beispielsweise kann es sein, dass kurz vor dem Beginn des Stromausfalls durch die Werkstückzuführeinrichtung 14 ein plattenförmiges Werkstück gerade von einem Lagerplatz angehoben wurde, um es der Werkstückbearbeitungseinrichtung 10 zuzuführen. In diesem Fall könnte das Werkstück nach Beginn des Stromausfalls einfach wieder abgesenkt und auf den Lagerplatz wieder zurückgelegt werden. Möglich ist aber auch, dass die Werkstückzuführeinrichtung 14 bei Beginn des Stromausfalls gerade dabei ist, ein bereits abgehobenes großformatiges Werkstück in Richtung zur Werkstückbearbeitungseinrichtung 12 zu bewegen. In diesem Fall könnte veranlasst werden, dass das Werkstück am nächstgelegenen Zwischenlagerplatz abgelegt wird.

Wenn alle Bewegungen der Werkstückzuführeinrichtung 14 im Block 54 beendet sind, wird die Werkstückzuführeinrichtung 14 in einem Funktionsblock 56 in einen energiesparenden Zustand versetzt. In einem solchen kann beispielsweise ein Kompressor, mit der im Normalbetrieb der Unterdruck an den Saugnäpfen der Saugtraverse bereitgestellt wird, ausgeschaltet sein. Auch können Beleuchtungseinrichtungen und Anzeigeeinrichtungen ausgeschaltet sein. Lediglich die Steuer- und Regeleinrichtung 22 wird vorzugsweise weiterbetrieben, vorzugsweise jedoch nur in einem solchen Stand-by-Zustand, aus dem sie dann, wenn der Stromausfall endet, sehr schnell wieder in den normalen Betriebszustand gebracht werden kann. Die erste Variante des Notverfahrens 50 endet schließlich in einem Endblock 76.

Bei der zweiten Variante eines Notverfahrens entsprechend dem Funktionsblock 52 wird die Werkstückzuführeinrichtung 14 in einem eingeschränkten Umfang weiterbetrieben. Hierzu wird zunächst in einem Funktionsblock 58 geprüft, ob eine zu Beginn des Stromausfalls vorliegende Bewegung eines Werkstücks die Werkstückbearbeitungseinrichtung 12 zum Ziel hat. Ist die Antwort "Ja", wird das Werkstück in einem Funktionsblock 60 an einem Zwischenlagerplatz abgelegt, da die Werkstückbearbeitungseinrichtung 12 aufgrund des Stromausfalls ja stillgelegt ist. Bei einer nicht gezeigten Ausführungsform wird noch geprüft, ob die Werkstückbearbeitungseinrichtung 12 in einem Zustand ist, in dem das Werkstück trotz stillgelegter Werkstückbearbeitungseinrichtung 12 auf dieser abgelegt werden kann. Dies wäre beispielsweise dann der Fall, wenn ein Zuführtisch der Werkstückbearbeitungseinrichtung 12 frei ist. In diesem Fall könnte das Werkstück der Werkstückbearbeitungseinrichtung 12 zugeführt und dort abgelegt werden.

Ist die Antwort im Funktionsblock 58 "Nein", wird die Bewegung des Werkstücks durch die Werkstückzuführeinrichtung 14 wie geplant fortgesetzt (Funktionsblock 62). Dann wird in einem Funktionsblock 64 abgefragt, ob eine nach dem Beginn des Stromausfalls durchzuführende Bewegung eines Werkstücks die Werkstückbearbeitungseinrichtung 12 zum Ziel hat. Ist die Antwort "Nein", wird die Bewegung des Werkstücks in einem Funktionsblock 66 wie geplant durchgeführt. Ist die Antwort dagegen "Ja", wird die geplante Bewegung in einem Funktionsblock 68 umgewandelt in eine Bewegung zu einem Zwischenlagerplatz. Vorzugsweise ist der Zwischenlagerplatz in der Nähe der Werkstückbearbeitungseinrichtung 12.

Weitere derartige geplante Bewegungen von Werkstücken werden ebenfalls durchgeführt und umgewandelt in Bewegungen zu diesem Zwischenlagerplatz. Dabei werden die Bewegungen vorzugsweise so umsortiert, dass die Werkstücke an dem Zwischenlagerplatz in umgekehrter Produktionsreihenfolge abgelegt werden. Nach einem Ende des Stromausfalls und der Wiederinbetriebnahme der Werkstückbearbeitungseinrichtung 12 ist somit das oberste Werkstück auf dem auf dem Zwischenlagerplatz liegenden Werkstückstapel das erste Werkstück, welches gemäß dem vorgesehenen Bearbeitungsplan der Werkstückbearbeitungseinrichtung 12 zugeführt werden soll.

Anschließend wird in einem Funktionsblock 70 geprüft, ob der Stromausfall während der Bearbeitung eines Werkstücks durch die Werkstückbearbeitungseinrichtung 12 eingetreten ist und somit die Bearbeitung dieses Werkstücks nicht beendet werden konnte. Ist die Antwort auf die Abfrage "Ja", wird in einem Funktionsblock 72 geprüft, ob deswegen ein Bearbeitungsplan angepasst werden muss. Dies ist beispielsweise dann der Fall, wenn durch die Unterbrechung der Bearbeitung das gerade bearbeitete bzw. erzeugte Werkstück nicht brauchbar ist. Es muss daher nachproduziert werden. Ist dies der Fall (Ergebnis der Abfrage im Funktionsblock 72 = "Ja"), wird der Bearbeitungsplan in einem Funktionsblock 74 automatisch angepasst, so dass nach dem Ende des Stromausfalls und der Wiederinbetriebnahme der Werkstückbearbeitungseinrichtung 12 das entsprechende Werkstück nachproduziert werden kann.

Insbesondere bei dem zweiten Notverfahren gemäß Funktionsblock 52 wird während der Ausführung des Notverfahrens kontinuierlich geprüft, ob für den als nächstes durchzuführenden Verfahrensschritt noch ausreichend elektrische Energie durch die zweite elektrische Energieversorgungseinrichtung 26 zur Verfügung gestellt werden kann. Wird festgestellt, dass die elektrische Energie, die die zweite elektrische Energieversorgungseinrichtung 26 zur Verfügung stellen kann, zur Neige geht, wird der Betrieb der Werkstückzuführeinrichtung 14 kontrolliert beendet, indem entweder nur der nächste geplante Handgabungsschritt oder nur ein anderer mit der zur Verfügung stehenden Energie möglicher Handhabungsschritt noch ausgeführt und dann der Betrieb eingestellt wird, oder der Betrieb vor Beginn des nächsten eigentlich geplanten Handhabungsschritts eingestellt wird, wenn die von der zweiten elektrischen Energieversorgungseinrichtung 26 zur Verfügung stellbare Energie für keinen weiteren Handhabungsschritt mehr ausreicht. Dies ist durch einen gestrichelt gezeichneten Kasten mit dem Bezugszeichen 73 angedeutet, der die Funktionsblöcke 60-74 einschließt und von dem ein Quersprung vor den Funktionsblock 56 führt (es kann also vor jedem der Funktionsblöcke 60-74 des zweiten Notverfahrens 52 vor den Funktionsblock 56 gesprungen werden). Somit kann das zweite Notverfahren gemäß Funktionsblock 52 so lange durchgeführt werden, bis die zweite elektrische Energieversorgungseinrichtung 26 keine für weitere Handhabungen notwendige Energie bereitstellen kann. Auch kann dann die Steuer- und Regeleinrichtung 22 kontrolliert heruntergefahren und beispielsweise in einen Stand-by-Zustand gebracht werden. Ähnlich wurde dies bereits oben im Zusammenhang mit dem Funktionsblock 53 beschrieben.

Ferner kann bei dem zweiten Notverfahren gemäß Funktionsblock 52 die Werkstückzuführeinrichtung 14 besonders energiesparend betrieben werden. Beispielsweise können die Bewegungen von Werkstücken durch die Werkstückzuführeinrichtung 14 verlangsamt werden, und sowohl positive als auch negative Beschleunigungen zu Beginn und am Ende von Bewegungen von Werkstücken können reduziert werden. Hierbei kann auch das Gewicht des zu bewegenden Werkstücks berücksichtigt werden.

Beide Notverfahren entsprechend den Funktionsblöcken 56 und 58 enden in einem Endblock 76.

Am Ende eines Durchlaufs, also beispielsweise einer abgeschlossenen Bewegung der Werkstückzuführeinrichtung 14, wird in einem Funktionsblock 75 geprüft, ob die erste elektrische Energieversorgungseinrichtung 24 wieder zur Verfügung steht, also der Stromausfall beendet ist. Ist dies der Fall (Antwort "Ja"), endet der Ablauf in dem bereits oben erwähnten Endblock 76, und es kann beispielsweise wieder in den normalen Betrieb der Werkstückbearbeitungsanlage 10 übergegangen werden. Dauert der Stromausfall dagegen fort, (Antwort "Nein"), springt das Verfahren zurück vor den Funktionsblock 40, in dem nochmals die erwartete Dauer des Stromausfalls abgerufen wird, und es wird danach wieder im Funktionsblock 48 entschieden, ob die erste Variante des Notverfahrens im Funktionsblock 50 oder die zweite Variante des Notverfahrens im Funktionsblock 52 durchgeführt werden soll**.** Auch kann wieder der aktuelle Speicherfüllgrad im Funktionsblock 53 abgerufen und können die bereits oben im Zusammenhang mit dem Funktionsblock 53 beschriebenen Logiken ausgeführt werden.

Es versteht sich, dass der obige Verfahrensablauf lediglich beispielhaft ist. Bei anderen nicht gezeigten und nicht beschriebenen Ausführungsformen können sich die Notverfahren durch andere Parameter und andere Verfahrensschritte voneinander unterscheiden. Insgesamt erkennt man jedoch aus dem beispielhaft beschriebenen Verfahrensablauf, dass die Steuer- und Regeleinrichtung 22 der Werkstückzuführeinrichtung 14 abhängig von den Prozessdaten (aktueller Prozessschritt, Quelle, Ziel, Art des Auftrags) dynamisch auf einen Stromausfall reagiert. Es findet eine stetige und intelligente Optimierung auf Basis von Anzahl und Dauer von Stromausfällen, der Kapazität der zweiten elektrischen Energieversorgungseinrichtung 26 und des Leistungsbedarfs der Werkstückzuführeinrichtung 14 statt. Erreicht die Kapazität der zweiten elektrischen Energieversorgungseinrichtung 26 während eines anstehenden Stromausfalls einen kritischen Bereich, wird als Endzustand in jedem Fall auch bei der Werkstückzuführeinrichtung 14 das Herunterfahren der Steuer-und Regeleinrichtung 22 ausgelöst, um Datenbankinkonsistenz zu vermeiden.

Typischerweise werden zu Beginn des Stromausfalls von der Werkstückzuführeinrichtung 14 aufgenommene Werkstücke, die die Werkstückbearbeitungseinrichtung 12 zum Ziel haben, nach Möglichkeit dorthin gebracht. Spätestens danach wird die Werkstückbearbeitungseinrichtung 12 jedoch als Ziel gesperrt. Mögliche Werkstückbewegungen, beispielsweise Einlagerungen und Umlagerungen, werden weiterhin im Wesentlichen uneingeschränkt durchgeführt. Nicht mehr mögliche Werkstückbewegungen, beispielsweise Auslagerungen zur Werkstückbearbeitungseinrichtung 12 hin, werden durch mögliche Werkstückbewegungen, beispielsweise Zwischenlagerung an Zwischenlagern, ersetzt. Abhängig von den aufgezeichneten historischen Daten und der erwarteten Dauer des Stromausfalls kann die Werkstückzuführeinrichtung 14 nach einer bestimmten maximalen Anzahl von Werkstückbewegungen den Betrieb beenden und in einen Stand-by-Betrieb wechseln.

Es versteht sich, dass nach dem Ende des Stromausfalls die Werkstückzuführeinrichtung 14 selbstständig und ohne Eingriff durch eine Bedienperson den Betrieb wieder fortsetzen kann. Üblicherweise muss die Werkstückzuführeinrichtung 14 jedoch wieder manuell in einen produktionsbereiten Zustand gebracht werden.

## Patentansprüche

1. Verfahren zum Betreiben einer Werkstückbearbeitungsanlage (10), die eine Werkstückbearbeitungseinrichtung in Form einer Plattenaufteilsäge zum Aufteilen von großformatigen Platten und eine Werkstückzuführeinrichtung umfasst, bei dem bei einem Ausfall einer ersten elektrischen Energieversorgungseinrichtung (24) wenigstens zeitweise elektrische Energie durch eine zweite elektrische Energieversorgungseinrichtung (26) bereitgestellt wird, und bei dem während einer solchen Bereitstellung von elektrischer Energie durch die zweite Energieversorgungseinrichtung (26) ein vorgegebenes Notverfahren ausgeführt wird, wobei mindestens ein Parameter, der das vorgegebene Notverfahren charakterisiert, von einer erwarteten Dauer des Ausfalls der ersten elektrischen Energieversorgungseinrichtung (24) abhängt, und wobei der Parameter, der das vorgegebene Notverfahren charakterisiert, mindestens einer ist aus der folgenden Gruppe: Position eines durch die Werkstückbearbeitungsanlage durchgeführten Verfahrensschritts in einer Reihe von mehreren Verfahrensschritten, Anzahl von durch die Werkstückbearbeitungsanlage durchgeführten Verfahrensschritten, Geschwindigkeit und/oder Geschwindigkeitsverlauf der Ausführung mindestens eines durch die Werkstückbearbeitungsanlage durchgeführten Verfahrensschritts, Dauer mindestens eines durch die Werkstückbearbeitungsanlage durchgeführten Verfahrensschritts.

2. Verfahren nach Anspruch 1, **dadurch gekennzeichnet, dass** das Notverfahren umfasst: Bereitstellen von elektrischer Energie durch die zweite Energieversorgungseinrichtung (26) an eine Sicherheitseinrichtung (18) der Werkstückbearbeitungsanlage (10).

3. Verfahren nach wenigstens einem der vorhergehenden Ansprüche, **dadurch gekennzeichnet, dass** eine erwartete Dauer des Ausfalls der ersten elektrischen Energieversorgung (24) auf der Basis von historischen Daten ermittelt wird.

4. Verfahren nach wenigstens einem der vorhergehenden Ansprüche, **dadurch gekennzeichnet, dass** die Werkstückbearbeitungsanlage (10) mindestens eine Werkstückbearbeitungseinrichtung (12) zum Bearbeiten von Werkstücken und eine Werkstückzuführeinrichtung (14) zum Zuführen von Werkstücken zu der Werkstückbearbeitungseinrichtung (12) umfasst, und dass bei einer erwarteten ersten und vergleichsweise langen Dauer des Ausfalls der ersten elektrischen Energieversorgung (24) das Notverfahren umfasst: Beenden einer, vorzugsweise einer vor dem Ausfall begonnenen, Bewegung eines Werkstücks durch die Werkstückzuführeinrichtung (14) durch ein gesteuertes Ablegen des Werkstücks.

5. Verfahren nach Anspruch 4, **dadurch gekennzeichnet, dass** das Notverfahren umfasst: Versetzen der Werkstückzuführeinrichtung (14) nach dem gesteuerten Ablegen des Werkstücks in einen energiesparenden Zustand.

6. Verfahren nach wenigstens einem der vorhergehenden Ansprüche, **dadurch gekennzeichnet, dass** die Werkstückbearbeitungsanlage (10) mindestens eine Werkstückbearbeitungseinrichtung (12) zum Bearbeiten von Werkstücken und eine Werkstückzuführeinrichtung (14) zum Zuführen von Werkstücken zu der Werkstückbearbeitungseinrichtung (12) umfasst, und dass bei einer erwarteten zweiten und vergleichsweise kurzen Dauer des Ausfalls der ersten elektrischen Energieversorgung (24) das Notverfahren umfasst: Fortsetzen einer vor dem Ausfall begonnenen Bewegung eines Werkstücks durch die Werkstückzuführeinrichtung (14), welches nicht die Werkstückbearbeitungseinrichtung (12) als Quelle oder als Ziel hat, wie vor dem Ausfall vorgesehen.

7. Verfahren nach Anspruch 6, **dadurch gekennzeichnet, dass** mindestens eine während des Notverfahrens zu beginnende Bewegung der Werkstückzuführeinrichtung (14) mindestens im Wesentlichen unverändert durchgeführt wird.

8. Verfahren nach Anspruch 7, **dadurch gekennzeichnet, dass** die Bewegung der Werkstückzuführeinrichtung (14) eine ist aus der folgenden Gruppe: Einlagern eines Werkstücks, Umlagern eines Werkstücks, Freimachen eines Ortes von Werkstücken, Vorauslagern eines Werkstücks.

9. Verfahren nach wenigstens einem der Ansprüche 6-8, dass eine Bewegung der Werkstückzuführeinrichtung (14), die die Werkstückbearbeitungseinrichtung (12) als Quelle oder als Ziel hat, während des Notverfahrens nicht begonnen wird.

10. Verfahren nach wenigstens einem der Ansprüche 6-9, **dadurch gekennzeichnet, dass** vorgesehene und noch nicht begonnene Bewegungen von Werkstücken mit der Werkstückbearbeitungseinrichtung (12) als Ziel automatisch umgewandelt werden in Bewegungen zu einem vorzugsweise in der Nähe der Werkstückbearbeitungseinrichtung (12) angeordneten Zwischenlagerplatz, wobei die Werkstücke am Zwischenlagerplatz vorzugsweise in umgekehrter Produktionsreihenfolge abgelegt werden, und/oder umgewandelt werden in eine Bewegung der Werkstückzuführeinrichtung (14), die eine ist aus der folgenden Gruppe: Einlagern eines Werkstücks, Umlagern eines Werkstücks, Freimachen eines Ortes von Werkstücken, Vorauslagern eines Werkstücks.

11. Verfahren nach wenigstens einem der Ansprüche 4-10, **dadurch gekennzeichnet, dass** dann, wenn eine vor dem Ausfall begonnene Bewegung eines Werkstücks durch die Werkstückzuführeinrichtung (14) die Werkstückbearbeitungseinrichtung (12) als Ziel hat und sich die Werkstückbearbeitungseinrichtung (12) nicht in einem Zustand befindet, in dem sie das Werkstück aufnehmen kann, die Bewegung zu der Werkstückbearbeitungseinrichtung (12) als Ziel abgebrochen und das Werkstück auf einem Zwischenlagerplatz abgelegt wird.

12. Verfahren nach wenigstens einem der Ansprüche 4-11, **dadurch gekennzeichnet, dass** geprüft wird, ob ein zu Beginn des Notverfahrens gerade durch die Werkstückbearbeitungseinrichtung (10) bearbeitetes Werkstück von der Werkstückzuführeinrichtung (14) nochmals bereitgestellt werden muss oder nach dem Ende des Notverfahrens weiterbearbeitet werden kann.

13. Werkstückbearbeitungsanlage (10), umfassend eine Werkstückbearbeitungseinrichtung in Form einer Plattenaufteilsäge zum Aufteilen von großformatigen Platten, eine Werkstückzuführeinrichtung, eine erste elektrische Energieversorgungseinrichtung (24) und eine zweite elektrische Energieversorgungseinrichtung (26), die elektrische Energie bei einem Ausfall der ersten elektrischen Energieversorgung (24) wenigstens zeitweise bereitstellt, **dadurch gekennzeichnet, dass** sie eine Steuer und/oder Regeleinrichtung (20, 22) aufweist, die zur Ausführung eines Verfahrens nach einem der vorhergehenden Ansprüche programmiert ist.

## Claims

1. Method for operating a workpiece processing system (10) comprising a workpiece processing device in the form of a panel saw for dividing large-format panels and a workpiece feeding device, in which, in the event of a failure of a first electrical power supply device (24), electrical power is provided at least temporarily by a second electrical power supply device (26), and in which, while electrical power is supplied in this way by the second power supply device (26), a predetermined emergency procedure is executed, wherein at least one parameter characterizing the predetermined emergency procedure depends on an expected duration of the failure of the first electrical power supply device (24), and wherein the parameter characterizing the predetermined emergency procedure is at least one from the following group: position of a method step performed by the workpiece processing system in a series of multiple method steps, number of method steps performed by the workpiece processing system, speed and/or speed profile of the execution of at least one method step performed by the workpiece processing system, duration of at least one method step performed by the workpiece processing system.

2. Method according to claim 1, **characterized in that** the emergency procedure comprises: providing electrical power through the second power supply device (26) to a safety device (18) of the workpiece processing system (10).

3. Method according to at least one of the preceding claims, **characterized in that** an expected duration of the failure of the first electrical power supply (24) is determined on the basis of historical data.

4. Method according to at least one of the preceding claims, **characterized in that** the workpiece processing system (10) comprises at least one workpiece processing device (12) for processing workpieces and a workpiece feeding device (14) for feeding workpieces to the workpiece processing device (12), and **in that** in the event of an expected first and comparatively long duration of the failure of the first electrical power supply (24), the emergency procedure comprises: terminating a movement of a workpiece by the workpiece feeding device (14), preferably that started before the failure, by means of a controlled placement of the workpiece.

5. Method according to claim 4, **characterized in that** the emergency procedure comprises: putting the workpiece feeding device (14) into an power-saving state after the controlled placement of the workpiece.

6. Method according to at least one of the preceding claims, **characterized in that** the workpiece processing system (10) comprises at least one workpiece processing device (12) for processing workpieces and a workpiece feeding device (14) for feeding workpieces to the workpiece processing device (12), and **in that** in the event of an expected second and comparatively short duration of the failure of the first electrical power supply (24), the emergency procedure comprises: continuing a movement of a workpiece by the workpiece feeding device (14) that was started before the failure and does not have the workpiece processing device (12) as its source or destination as intended before the failure.

7. Method according to claim 6, **characterized in that** at least one movement of the workpiece feeding device (14) to be started during the emergency procedure is performed at least substantially unchanged.

8. Method according to claim 7, **characterized in that** the movement of the workpiece feeding device (14) is one from the following group: storing a workpiece, repositioning a workpiece, clearing a location of workpieces, pre-storing a workpiece.

9. Method according to at least one of claims 6-8, in that a movement of the workpiece feeding device (14) which has the workpiece processing device (12) as its source or as its destination is not started during the emergency procedure.

10. Method according to at least one of claims 6-9, **characterized in that** intended and not yet started movements of workpieces with the workpiece processing device (12) as the destination are automatically converted into movements to an intermediate storage location preferably arranged near the workpiece processing device (12), the workpieces preferably being placed at the intermediate storage location in reverse production sequence, and/or are converted into a movement of the workpiece feeding device (14) which is one from the following group: storing a workpiece, repositioning a workpiece, clearing a location of workpieces, pre-storing a workpiece.

11. Method according to at least one of claims 4-10, **characterized in that** in the event that a movement of a workpiece by the workpiece feeding device (14) that started before the failure has the workpiece processing device (12) as its destination and the workpiece processing device (12) is not in a state in which it can receive the workpiece, the movement toward the workpiece processing device (12) as its destination is aborted and the workpiece is placed on an intermediate storage location.

12. Method according to at least one of claims 4-11, **characterized in that** it is checked whether a workpiece that was being processed by the workpiece processing device (10) at the start of the emergency procedure needs to be provided again by the workpiece feeding device (14) or whether the workpiece can be processed further after the end of the emergency procedure.

13. Workpiece processing system (10), comprising a workpiece processing device in the form of a panel saw for dividing large-format panels, a workpiece feeding device, a first electrical power supply device (24) and a second electrical power supply device (26) which provides electrical power at least temporarily in the event of a failure of the first electrical power supply (24), **characterized in that** the system comprises an open-loop and/or closed-loop control device (20, 22) which is programmed to execute a method according to any of the preceding claims.

## Revendications

1. Procédé destiné à faire fonctionner une installation d'usinage de pièces (10), qui comprend un dispositif d'usinage de pièces sous la forme d'une scie à panneaux pour la découpe de panneaux de grand format et un dispositif d'amenée de pièces, dans lequel, en cas de panne d'un premier dispositif d'alimentation en énergie électrique (24), de l'énergie électrique est fournie au moins temporairement par un deuxième dispositif d'alimentation en énergie électrique (26), et dans lequel, pendant une telle fourniture d'énergie électrique par le deuxième dispositif d'alimentation en énergie (26), un procédé d'urgence spécifié est exécuté, dans lequel au moins un paramètre caractérisant le procédé d'urgence spécifié dépend d'une durée attendue de la panne du premier dispositif d'alimentation en énergie électrique (24), dans lequel le paramètre caractérisant le procédé d'urgence spécifié est au moins un parmi le groupe suivant : position d'une étape de procédé effectuée par l'installation d'usinage de pièces (10) dans une série de plusieurs étapes de procédé, nombre d'étapes de procédé effectuées par l'installation d'usinage de pièces (10), vitesse et/ou évolution de vitesse de l'exécution d'au moins une étape de procédé effectuée par l'installation d'usinage de pièces (10), durée d'au moins une étape de procédé effectuée par l'installation d'usinage de pièces (10).

2. Procédé selon la revendication 1, **caractérisé en ce que** le procédé d'urgence comprend: la fourniture d'énergie électrique par le deuxième dispositif d'alimentation en énergie (26) à un dispositif de sécurité (18) de l'installation d'usinage de pièces (10).

3. Procédé selon au moins l'une quelconque des revendications précédentes, **caractérisé en ce qu'**une durée attendue de la panne du premier dispositif d'alimentation en énergie électrique (24) est déterminée sur la base de données historiques.

4. Procédé selon au moins l'une quelconque des revendications précédentes, **caractérisé en ce que** l'installation d'usinage de pièces (10) comprend au moins un dispositif d'usinage de pièces (12) destiné à usiner des pièces et un dispositif d'amenée de pièces (14) destiné à amener des pièces à l'installation d'usinage de pièces (12), et que dans le cas d'une première durée attendue et comparativement longue de la panne du premier dispositif d'alimentation en énergie électrique (24), le procédé d'urgence comprend: la fin d'un déplacement d'une pièce, de préférence commencé avant la panne, par le dispositif d'amenée de pièces (14) par un dépôt commandé de la pièce.

5. Procédé selon la revendication 4, **caractérisé en ce que** le procédé d'urgence comprend: le déplacement du dispositif d'amenée de pièces (14) dans un état d'économie d'énergie après le dépôt contrôlé de la pièce.

6. Procédé selon au moins l'une quelconque des revendications précédentes, **caractérisé en ce que** l'installation d'usinage de pièces (10) comprend au moins un dispositif d'usinage de pièces (12) destiné à usiner des pièces et un dispositif d'amenée de pièces (14) destiné à amener des pièces à l'installation d'usinage de pièces (12), et que, dans le cas d'une deuxième durée attendue et comparativement courte de la panne du premier dispositif d'alimentation en énergie électrique (24), le procédé d'urgence comprend: la poursuite d'un déplacement d'une pièce commencé avant la panne par le dispositif d'amenée de pièces (14), qui n'a pas pour source ou cible le dispositif d'usinage de pièces (12), comme prévu avant la panne.

7. Procédé selon la revendication 6, **caractérisé en ce qu'**au moins un déplacement du dispositif d'amenée de pièces (14) à commencer pendant le procédé d'urgence est effectué au moins sensiblement de manière inchangée.

8. Procédé selon la revendication 7, **caractérisé en ce que** le déplacement du dispositif d'amenée de pièces (14) est un parmi le groupe suivant: le stockage d'une pièce, le déplacement d'une pièce, le dégagement d'un emplacement de pièces, le préstockage d'une pièce.

9. Procédé selon au moins l'une quelconque des revendications 6 à 8, **caractérisé en ce qu'**un déplacement du dispositif d'amenée de pièces (14), qui a pour source ou pour cible le dispositif d'usinage de pièces (12), n'est pas démarré pendant le procédé d'urgence.

10. Procédé selon au moins l'une quelconque des revendications 6 à 9, **caractérisé en ce que** des déplacements de pièces prévus et non encore commencés avec le dispositif d'usinage de pièces à usiner (12) comme cible sont automatiquement convertis en déplacements vers un emplacement de stockage intermédiaire disposé de préférence à proximité du dispositif d'usinage de pièces (12), les pièces étant déposées de préférence dans l'ordre de production inverse sur l'emplacement de stockage intermédiaire, et/ou sont convertis en un déplacement du dispositif d'amenée de pièce (14), qui est l'un parmi le groupe suivant: le stockage d'une pièce, le déplacement d'une pièce, le dégagement d'un emplacement de pièces, le préstockage d'une pièce.

11. Procédé selon au moins l'une quelconque des revendications 4 à 10, **caractérisé en ce que** lorsqu'un déplacement d'une pièce commencé avant la panne par le dispositif d'amenée de pièces (14) a pour cible le dispositif d'usinage de pièces (12) et que le dispositif d'usinage de pièces (12) ne se trouve pas dans un état dans lequel il peut recevoir la pièce, le déplacement vers le dispositif d'usinage de pièces (12) comme cible est interrompu et la pièce est déposée sur un emplacement de stockage intermédiaire.

12. Procédé selon au moins l'une quelconque des revendications 4-11, **caractérisé en ce que** l'on vérifie si une pièce qui vient d'être usinée par le dispositif d'usinage de pièces (10) au début du procédé d'urgence doit être à nouveau fournie par le dispositif d'amenée de pièces (14) ou peut être traitée ultérieurement après la fin du procédé d'urgence.

13. Installation d'usinage de pièces (10) comprenant un premier dispositif d'alimentation en énergie électrique (24) et un deuxième dispositif d'alimentation en énergie électrique (26), qui fournit de l'énergie électrique au moins temporairement en cas de panne du premier dispositif d'alimentation en énergie électrique (24), **caractérisée en ce qu'**elle présente un dispositif de commande et/ou de régulation (20, 22) qui est programmé pour exécuter un procédé selon l'une quelconque des revendications précédentes.
